# EUROPÄISCHE PATENTSCHRIFT

(11) **EP 3 289 772 B1**
(45) Veröffentlichungstag und Bekanntmachung des Hinweises auf die Patenterteilung: **06.11.2019**
(21) Anmeldenummer: 16717339.2
(22) Anmeldetag: 14.04.2016
(51) Int. Cl.: H04R 1/02, A45C 11/00, A45C 15/00, G06F 1/16

(54) **TRANSPORTABLES LAUTSPRECHERSYSTEM MIT GROSSEM KLANG- UND RESONANZVOLUMEN AUF BASIS EINER SOUNDBLENDE MIT REFLEXIONS- UND RESONANZEFFEKT**
TRANSPORTABLE LOUDSPEAKER SYSTEM HAVING A LARGE SOUND AND RESONANCE VOLUME ON THE BASIS OF A SOUND DIAPHRAGM WITH REFLECTION AND RESONANCE EFFECT
SYSTÈME DE HAUT-PARLEURS TRANSPORTABLE À GRAND VOLUME DE SON ET RÉSONANCE À BASE D'UN ÉCRAN ACOUSTIQUE À EFFET DE RÉFLEXION ET DE RÉSONANCE

(30) Priorität: 28.04.2015 DE 202015102126 U
(43) Veröffentlichungstag der Anmeldung: 07.03.2018
(73) Patentinhaber: Englert, Klaus, 63755 Alzenau (DE)
(72) Erfinder: Englert, Klaus, 63755 Alzenau (DE)
(74) Vertreter: Keil & Schaafhausen Patent- und Rechtsanwälte PartGmbB
(86) Internationale Anmeldenummer: PCT/EP2016/058200
(87) Internationale Veröffentlichungsnummer: WO 2016/173855

(56) Entgegenhaltungen:
- WO-A1-99/27433
- WO-A1-2014/107702
- GB-A- 2 382 256
- US-A- 4 607 747
- US-B1- 6 298 990

## Beschreibung

Die Erfindung betrifft ein Lautsprechersystem, mit einem ersten plattenförmigen Bauteil, das wenigstens einen Lautsprecher aufweist, einem zweiten plattenförmigen Bauteil, welches um eine erste Schwenkachse schwenkbar an dem ersten Bauteil befestigt ist.

Viele elektronische Unterhaltungsgeräte wie Mobiltelefone, MP3-Player und Tablet Computer werden immer kompakter und leichter und können daher ständig von einem Benutzer mitgeführt werden. Solche Geräte weisen oftmals einen Lautsprecher auf, da der Benutzer mit solchen Geräten beispielsweise Musik hören, Filme anschauen und Spiele spielen möchte. Aufgrund ihrer kompakten Bauform werden aber lediglich sehr kleine Lautsprecher in solchen Geräten verbaut, wodurch die Klangqualität, vor allem im Tieftonbereich, leidet.

Besonders Tablet Computer ersetzen in zunehmendem Maße klassische Desktop PCs und vor allem Laptops und Notebooks. Sie haben aber konstruktionsbedingt einige Nachteile. Erstens liegt der empfindliche Bildschirm frei an einer Außenfläche und kann daher schnell zerkratzen oder gar zerstört werden. Zweitens kann der Winkel des Bildschirms nicht wie bei einem Laptop so geneigt werden, dass er in Richtung des Benutzers zeigt, da Bildschirm und Gehäuse ein einziges starres Teil bilden. Stattdessen liegt der Tablet Computer entweder flach auf einer Unterlage auf, oder er muss beim Bedienen in der Hand gehalten werden. Des Weiteren werden aufgrund der kompakten Bauform auch in Tablet Computern lediglich sehr kleine Lautsprecher verbaut. Aufgrund dieser baulichen Einschränkungen existiert eine Vielzahl von Accessoires um diese Nachteile zu beheben oder zumindest zu mindern.

Schutz- und Stützvorrichtungen für Tablet Computer sind in einer Vielzahl verschiedener Ausführungen bekannt. Eine Kombination aus schützender Tasche und Aufsteller kennt man beispielsweise aus EP 2 383 965 A1. Eine weitere Computerstützvorrichtung mit der Funktion einer Tragetasche offenbart DE 20 2011 051 426 U1. Ein stabiles Gehäuse mit einer Vorrichtung zum Aufstellen des darin befindlichen Tablet Computers ist aus DE 20 2012 100 042 U1 bekannt.

Auch Vorrichtungen zur Verbesserung der Klangeigenschaften eines Tablet Computers sind hinreichend bekannt. Diese lenken die, beispielsweise an der Rückseite eines Tablet Computers erzeugten, Schallwellen nach vorne zum Benutzer, wie bei der Klangführungshülle in US 2013/0004012 A1 oder der Multifunktionshülle in WO 2014/147410 A1.

Andere Varianten erweitern die integrierten Lautsprecher eines Tablet Computers um ein Klang- und Resonanzvolumen um die Klangeigenschaften zu verbessern, wie es etwa vom "Sounder Stand" bekannt ist (https://www.kickstarter.com/projects/1034665231/the-sounder-natural-amplifier-for-the-ipad). Ein größeres Klangvolumen als der "Sounder Stand" bietet die "iBox", ein als Holzschachtel konstruierter Tablet Computer Halter (http://www.slashgear.com/ibox-is-25-worth-of-wood-to-hold-your-ipad-2891869/). Die Varianten mit Klangvolumen liefern zwar die größte Verbesserung der Klangeigenschaften, haben aber den entscheidenden Nachteil, dass sie sperrige und schwere Konstruktionen aufweisen. Sie sind daher nicht dazu geeignet immer mit dem Tablet Computer, welcher sich gerade durch die kompakte Bauform und das geringe Gewicht auszeichnet, mitgeführt zu werden.

Die Aufgabe besteht daher darin, ein transportables Lautsprechersystem zu schaffen, das eine gute Klangqualität, vor allem auch im Tieftonbereich, besitzt, und dennoch eine kompakte und leichte Bauform aufweist.

Die obige Aufgabe wird gelöst durch ein Lautsprechersystem gemäß Anspruch 1.

Ein Lautsprechersystem liefert eine gute Klangqualität, wenn es neben dem eigentlichen Lautsprecher ein Klang- und Resonanzvolumen besitzt. Um einen das Resonanzvolumen bildenden Resonanzkörper zu schaffen, werden mindestens drei Seitenwände benötigt. Durch die drei Seitenwände, welche erfindungsgemäß als plattenförmige Bauteile ausgeführt sind, und die Oberfläche einer Unterlage, auf die die Bauteile gestellt werden, wird bspw. ein Prisma mit einer dreieckigen Grundfläche und einer einseitig geöffneten Stirnfläche gebildet. Ein besonderer Vorteil des erfindungsgemäßen Lautsprechersystems liegt darin, dass das zweite und dritte Bauteil aufgrund ihrer Schwenkbarkeit und der Anordnung der Schwenkachsen auch als eine Stütze für das erste Bauteil dienen können. Es ist somit möglich, das erste Bauteil, bspw. ein Tablet Computer, mittels der beiden anderen Bauteile in einer gewünschten Position zu halten.

Um ein solches Lautsprechersystem auch transportabel zu gestalten, können die Teile des Resonanzkörpers Scharniere oder andere schwenkbare Verbindungen aufweisen. Damit können die Teile derart zusammengefaltet werden, dass ein flach liegender Zustand entsteht, bei dem die plattenförmigen Bauteile im Wesentlichen parallel zueinander und übereinander angeordnet sind. In einem solchen Zustand lässt sich das Lautsprechersystem einfach und platzsparend verstauen.

In einem aufgestellten Zustand, in dem die Teile das Resonanzvolumen bilden, stehen die Bauteile in einem spitzen, rechten oder stumpfen Winkel zueinander. In diesem aufgestellten Zustand dienen das zweite und das dritte Bauteil als Stützvorrichtung für das erste Bauteil, um das erste Bauteil in einem definierten Winkel aufzustellen. Dies ist von besonderem Vorteil, wenn das erste Bauteil neben dem Lautsprecher auch eine Anzeige zur Darstellung von Inhalten aufweist. Möchte ein Benutzer diese Anzeige betrachten, sollte diese zum Benutzer hin ausgerichtet sein. Der Aufstellwinkel, also der Winkel den das erste Bauteil zu einer Unterlage bildet, kann dabei je nach Zweck flacher oder steiler gewählt werden.

Um durch die Bauteile und eine Unterlage in einem aufgestellten Zustand ein Resonanzvolumen bilden zu können, müssen die Bauteile mit jeweils einer ihrer Seitenkanten in einer Ebene liegen. Wird das System auf eine Unterlage gestellt, so muss die Oberfläche dieser Unterlage in dieser Ebene liegen, sodass die Bauteile bündig mit dieser Unterlage abschließen.

Der Lautsprecher des ersten plattenförmigen Bauteils befindet sich erfindungsgemäß an einer Seitenkante des Bauteils. Diese Seitenkante weist eine Abschrägung oder Abrundung auf, sodass die Öffnung des Lautsprechers in aufgestelltem Zustand nicht durch andere Bauteile, welche an dieser Seitenkante anliegen, verschlossen wird, sondern ins Innere des Volumens gerichtet ist.

In einer weiteren Ausführungsform können, neben dem ersten Bauteil, auch weitere Bauteile einen oder mehrere Lautsprecher aufweisen. Jeder Lautsprecher, der mit seiner Öffnung in das durch die Bauteile gebildete Volumen gerichtet ist, trägt zum gesamten Klangbild des Lautsprechersystems bei.

In einer bevorzugten Ausführungsform hat das dritte Bauteil eine dreieckige Grundform. Eine Seitenkante des Bauteils, die Unterkante, liegt in der Ebene und bildet somit die Verbindung zu einer Unterlage. Die Vorderkante des dritten Bauteils grenzt an das erste Bauteil an, und die Hinterkante grenzt an das zweite Bauteil. Der Winkel zwischen Unterkante und Vorderkante ist damit identisch mit dem Aufstellwinkel des ersten Bauteils, und der Winkel zwischen der Unterkante und der Hinterkante entspricht dem Neigungswinkel des zweiten Bauteils.

Um eine besonders hohe Stabilität im aufgestellten Zustand zu erreichen, kann der Neigungswinkel des zweiten Bauteils, also der Winkel des dritten Bauteils zwischen der Unterkante und der Hinterkante, kleiner als 90° sein.

Um eine besonders gute Resonanzwirkung zu erreichen, ist es wichtig, dass das Klangvolumen im Wesentlichen nur eine Öffnung besitzt. Es ist daher darauf zu achten, dass die einzelnen Bauteile möglichst schlüssig aneinander anliegen. Um dies zu erreichen, kann die erfindungsgemäß schwenkbare Verbindung zwischen dem dritten Bauteil und dem zweiten Bauteil als federunterstütztes Scharnier ausgebildet sein. Dadurch wird das dritte Bauteil von einer Feder in Kontakt mit dem ersten Bauteil gehalten.

Alternativ oder zusätzlich kann die Verbindung zwischen dem ersten und dem dritten Bauteil auch magnetisch gesichert sein. Hat das erste Bauteil ferromagnetische Eigenschaften, so zieht der Magnet das dritte Bauteil bündig an das erste Bauteil und führt so zu einer vollständig geschlossenen Verbindung.

Die Verbindung zwischen drittem Bauteil und zweitem Bauteil kann erfindungsgemäß auch durch eine Klemmschiene mit Scharnier erfolgen. Das Scharnier sorgt dabei für die Faltbarkeit der Verbindung und die Klemmschiene erlaubt es, die Verbindung reversibel anzustecken und abzuziehen. Scharnier und Klemmschiene können dabei auch als eine Einheit ausgebildet sein.

Soll die Verbindung dauerhaft sein, können zweites und drittes Bauteil auch einstückig ausgebildet sein. Die Schwenkbarkeit an der Verbindungsstelle wird dabei beispielsweise durch eine reduzierte Dicke in der Art eines Filmscharniers und/oder ein biegsames Material erreicht.

In einer bevorzugten Ausführungsform ist dabei vorgesehen, dass das zweite Bauteil und das dritte Bauteil in einem flach liegenden Zustand nicht einfach aufeinander aufliegen, sondern das zweite Bauteil eine für das dritte Bauteil passende Aussparung besitzt. Der Bereich des zweiten Bauteils hat dabei eine reduzierte Dicke, z.B. genau um den Betrag der Dicke des dritten Bauteils. Dadurch wird die Aussparung vom dritten Bauteil ausgefüllt. Die Aussparung kann dabei auch etwas größer als das dritte Bauteil sein, um ein problemloses Ein- und Ausklappen zu ermöglichen.

Möchte ein Benutzer die Teile von einem eingeklappten Zustand in einen ausgeklappten Zustand überführen, so muss er das dritte Bauteil greifen können. Dazu kann auch vorgesehen sein, die Aussparung im zweiten Bauteil, beispielsweise an der Position der Spitze des dritten Bauteils, derart zu vergrößern, dass das dritte Bauteil mit zwei Fingern gefasst werden kann.

Erfindungsgemäß kann z.B. das zweite Bauteil aus mehreren Segmenten aufgebaut sein, welche gelenkig miteinander verbunden sind. Beispielsweise kann in einem aufgestellten Zustand ein Segment eingeklappt sein, um somit die effektive Größe des zweiten Bauteils zu reduzieren. Dies ermöglicht einen flachen Aufstellwinkel zu erreichen, ohne gleichzeitig einen zu flachen Neigungswinkel zu erhalten.

In einer weiteren Ausführungsform hat die Hinterkante des dritten Bauteils die gleiche Länge wie die mit ihr verbundene Kante des zweiten Bauteils. Damit wird dementsprechend ein besonders großes Resonanzvolumen geschaffen.

Erfindungsgemäß kann es sich bei dem ersten Bauteil um einen Tablet Computer handeln. Dieser besitzt in den meisten Ausführungen die benötigten Lautsprecher an einer erfindungsgemäßen Position. Das zweite Bauteil ist dabei als Schutzdeckel für den Tablet Computer ausgebildet, und ist daher im Wesentlichen kongruent zum Tablet Computer. Für typische Tablet Computer mit Schutzdeckel benötigt man daher nur noch das dritte plattenförmige Bauteil, um ein erfindungsgemäßes Lautsprechersystem zu erhalten.

Da viele Benutzer bereits eine Schutz- und Stützvorrichtung für einen Tablet Computer besitzen, ist es vorgesehen, diese Vorrichtungen um das dritte Bauteil zu erweitern. Dazu besitzt das dritte Bauteil in einer Ausführungsform an der Hinterkante eine Klemmschiene mit Scharnier, die auf eine vorhandene Schutz- und Stützvorrichtung aufgesteckt werden kann um ein erfindungsgemäßes System zu schaffen. Da eine solche Verbindung mittels einer Klemmschiene vollständig reversibel ist, lässt sich das dritte Bauteil nach Belieben anstecken und entfernen. Da sie durch das Scharnier auch platzsparend weggeklappt werden kann, ist ein Entfernen bei jedem Zusammenklappen der Schutz- und Stützvorrichtung allerdings nicht notwendig.

Eine weitere Ausführungsform der Erfindung besitzt ein viertes plattenförmiges Bauteil, welches in der Ebene der Unterlage liegt, und somit das Resonanzvolumen anstelle der Unterlage abschließt. Dadurch wird auch ohne ebene Unterlage ein Resonanzvolumen geschaffen. Dies ist von besonderem Vorteil, wenn keine ebene Unterlage zur Verfügung steht. Außerdem besitzt vorzugsweise neben dem ersten plattenförmigen Bauteil auch mindestens ein weiteres Bauteil Lautsprecher, welche in das durch die Bauteile definierte Volumen ragen.

Es ist dabei vorgesehen, dass bereits ohne das vierte Bauteil ein erfindungsgemäßes Lautsprechersystem besteht, welches einen Akku oder eine Batterie aufweist, um unabhängig von einer externen Stromversorgung funktionstüchtig zu sein. Das vierte Bauteil dient dabei als Ladestation für den Akku oder die Batterie und kann dazu reversibel angeschlossen und entfernt werden. Das System ohne das vierte Bauteil kann dabei für den Transport in einen zusammengeklappten Zustand überführt werden.

Eine weitere Ausführungsform ist ein quaderförmiges Lautsprechersystem, wobei vier plattenförmigen Bauteile die Seitenflächen eines Quaders bilden und eine Grundfläche von einem weiteren plattenförmigen Bauteil abgeschlossen wird. Die Form dieser Ausführung der Erfindung kann auch dahingehend abgewandelt sein, dass die Grundfläche beispielsweise die Form eines Parallelogramms aufweist und die Anordnung der übrigen Bauteile daran angepasst ist. Auch kann die Grundfläche ein beliebiges n-Eck sein, wobei das Lautsprechersystem dementsprechend zusätzlich n plattenförmige Bauteile aufweist, welche die Seitenflächen bilden.

Die Erfindung wird nachfolgend anhand von Ausführungsbeispielen und unter Bezugnahme auf die Figuren erläutert.

Es zeigen:
- Fig. 1: eine Draufsicht auf einen Tablet Computer mit Schutzdeckel gemäß dem Stand der Technik;
- Fig. 2: einen Querschnitt durch einen Schutzdeckel gemäß dem Stand der Technik;

- Fig. 3: eine perspektivische Ansicht einer aus dem Stand der Technik bekannten aufgestellten Schutz und Stützvorrichtung mit Tablet Computer;
- Fig. 4: eine perspektivische Ansicht eines erfindungsgemäßen Systems;
- Fig. 5: Querschnitt durch ein erstes Bauteil
- Fig. 6: eine weitere perspektivische Ansicht eines erfindungsgemäßen Systems;
- Fig. 7: eine Draufsicht mit Detailansicht eines erfindungsgemäßen Systems;
- Fig. 8: eine Draufsicht eines erfindungsgemäßen Systems;
- Fig. 9: eine weitere Draufsicht und perspektivische Ansicht eines erfindungsgemäßen Systems;
- Fig. 10: Seitenansicht eines erfindungsgemäßen Systems mit und ohne drittes Bauteil und Querschnitt durch ein erfindungsgemäßes System in zusammengeklapptem Zustand;
- Fig. 11: Seitenansicht eines erfindungsgemäßen Systems mit und ohne drittes Bauteil; und
- Fig. 12: Seitenansicht eines Systems mit und ohne die Stirnfläche abschließendes Bauteil; das System fällt nicht unter den Schutzumfang der Ansprüche.

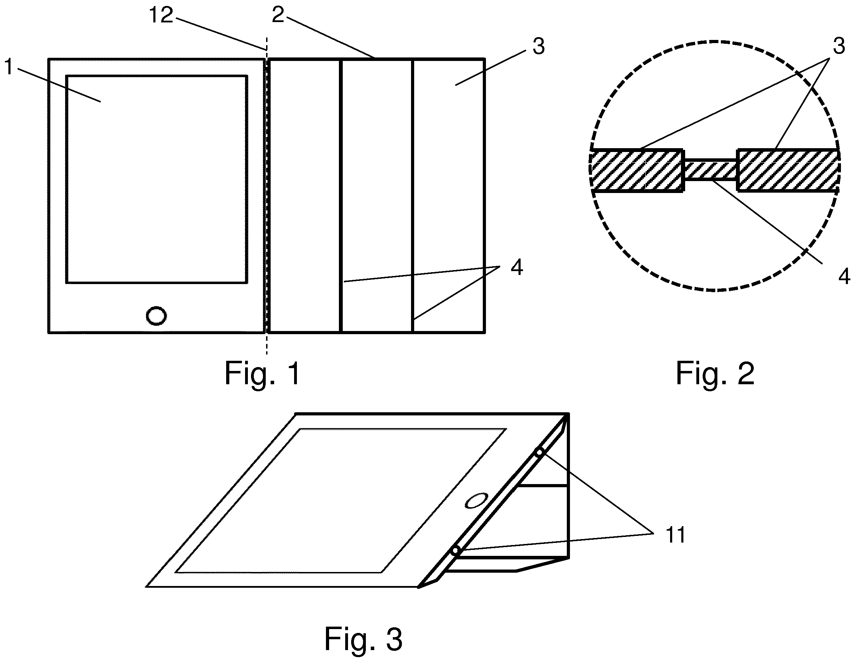

In den Fig. 1 bis 9 handelt es sich bei dem ersten Bauteil beispielhaft um einen Tablet Computer und bei dem zweiten Bauteil um eine zugehörige Schutz- und Stützvorrichtung. Die Erfindung ist jedoch nicht hierauf beschränkt. Vielmehr kann das erste Bauteil ein beliebiges anderes plattenförmiges Element mit wenigstens einem Lautsprecher sein.

Fig. 1 zeigt eine Draufsicht auf einen Tablet Computer 1 mit einem aus dem Stand der Technik bekannten Schutzdeckel 2, welcher vor den Bildschirm geklappt werden kann, um diesen vor Beschädigungen zu schützen. Ein solcher Schutzdeckel 2 kann aus mehreren Segmenten 3 aufgebaut sein, welche derart miteinander verbunden sind, dass sie an den Verbindungsstellen 4 faltbar sind.

Eine faltbare Verbindung wird typischerweise durch dünnes, biegsames Material zwischen den Segmenten 3 realisiert. Dies ist in Fig. 2 in einem Querschnitt durch einen solchen Schutzdeckel 2 gezeigt.

Durch Umklappen dieser Segmente 3 lässt sich aus dem Schutzdeckel 2 eine Stützvorrichtung für den Tablet Computer 1 herstellen. Mit dieser kann der Tablet Computer 1 angewinkelt aufgestellt werden, wie in der perspektivischen Ansicht in Fig. 3 zu sehen ist. Solche Schutz- und Stützvorrichtungen sind aus dem Stand der Technik bekannt. Der Tablet Computer besitzt an seiner Seitenkante außerdem zwei Lautsprecher 11.

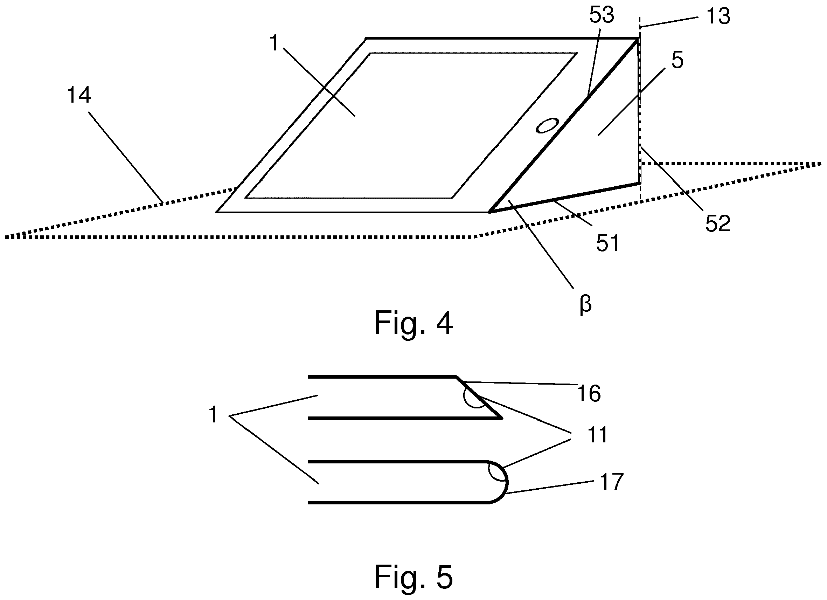

Fig. 4 zeigt eine perspektivische Ansicht einer erfindungsgemäßen Vorrichtung, bestehend aus dem Tablet Computer 1, dem Schutzdeckel 2 und einem dritten plattenförmigen Bauteil 5, welches nachfolgend beispielhaft als Soundblende 5 bezeichnet wird. Tablet Computer 1, Schutzdeckel 2 und Soundblende 5 liegen dabei mit jeweils einer ihrer Seitenkanten in der Ebene 14.

In der in Fig. 4 dargestellten Ausführungsform ist die Soundblende 5 dreieckig gestaltet und weist eine Unterkante 51, eine Hinterkante 52 und eine Vorderkante 53 auf. Die Soundblende 5 ist an der Hinterkante 52 am Schutzdeckel 2 befestigt, steht mit der Unterkante 51 auf dem in der Ebene 14 liegenden Untergrund und liegt an der Vorderkante 53 am Tablet Computer 1 an. Dadurch wird im aufgestellten Zustand durch Schutzdeckel 2, Soundblende 5, Tablet Computer 1 und Untergrund ein Volumen gebildet, welches nur an einer Teilfläche geöffnet ist. Die geöffnete Teilfläche dieses Volumens liegt an der der Soundblende 5 gegenüberliegenden Seite.

Typischerweise besitzt ein Tablet Computer 1 seine Lautsprecheröffnungen 11 innerhalb dieses Volumens, wodurch dieses Volumen als Klang- und Resonanzvolumen für die Lautsprecher 11 fungiert und somit zu einer deutlichen Verbesserung der Klangeigenschaften des Tablet Computers 1 führt. Der Aufstellwinkel β des Tablet Computers 1 vorgegeben durch den Winkel der Soundblende 5 zwischen Vorderkante 53 und Unterkante 51 kann ein beliebiger spitzer Winkel sein und damit je nach Bedarf eine Stützvorrichtung für sehr flache bis sehr steile Aufstellwinkel β des Tablet Computers 1 schaffen.

Da die Soundblende 5 an der Seitenkante des Tablet Computers 1 mit den Lautsprechern 11 anliegt, würde die Soundblende die Lautsprecheröffnungen verschließen. Um dies zu verhindern kann die Seitenkante des Tablet Computers 1 entweder eine Abschrägung 16 oder eine Rundung 17, wie in Fig. 5 gezeigt, aufweisen. Dadurch liegt die Öffnung der Lautsprecher 11 innerhalb des durch die Bauteile 1, 2, 5 definierten Volumens.

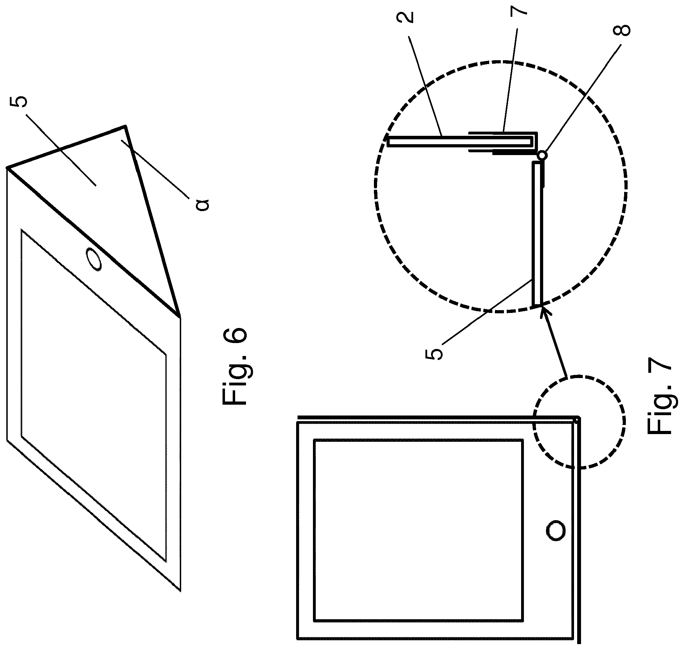

Eine bevorzugte Ausführungsform einer erfindungsgemäßen Vorrichtung ist in einer perspektivischen Ansicht in Fig. 6 dargestellt. Die Soundblende 5 besitzt in dieser Ausführungsform zwischen Unterkante 51 und Hinterkante 52 einen Neigungswinkel α kleiner als 90°, wodurch die Soundblende 5 und der damit verbundene Schutzdeckel 2 einen Neigungswinkel α zur Oberflächennormalen des Untergrunds erhalten. Dieser Neigungswinkel α sorgt für eine erhöhte Standfestigkeit, besonders bei Ausführungsformen mit steilen Aufstellwinkeln β für den Tablet Computer 1.

In einer bevorzugten Ausführungsform wird die Verbindung zwischen Soundblende 5 und Schutzdeckel 2 über eine Scharnier-Klemmschiene 7, 8 hergestellt, wie in Fig. 7 in einer Draufsicht und Detailansicht verdeutlicht. Die Scharnier-Klemmschiene 7, 8 ist dauerhaft mit der Soundblende 5 verbunden, und ist dazu ausgefertigt auf die seitliche Kante des Schutzdeckels 2 aufgesteckt zu werden, wodurch eine reversible, klappbare Verbindung zwischen Soundblende 5 und Schutzdeckel 2 entsteht. Klemmschiene 7 und Scharnier 8 sind dabei als eine Einheit ausgefertigt. Diese einfache und reversible Verbindung ermöglicht es, die Soundblende 5 schnell an einen vorhandenen Schutzdeckel 2 anzustecken um eine erfindungsgemäße Vorrichtung zu erhalten. Wenn der Schutzdeckel 2 vor den Bildschirm geklappt wird, muss die gesteckte Verbindung nicht gelöst werden, denn die Soundblende 5 lässt sich durch das Scharnier 8 einfach einklappen, um platzsparend verstaut zu werden.

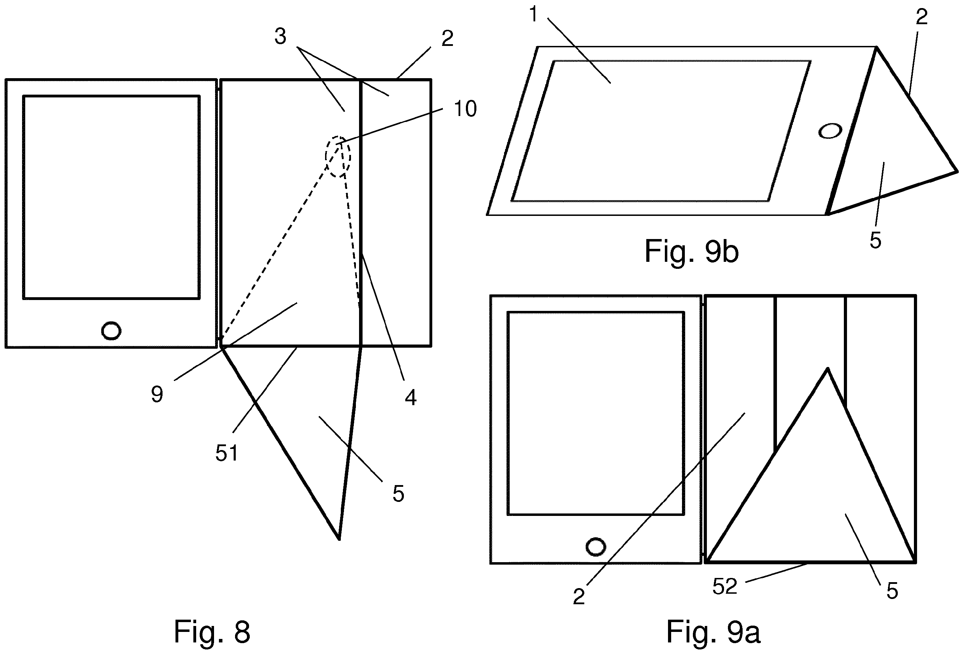

Fig. 8 zeigt eine bevorzugte Ausführungsform der Erfindung in einer Draufsicht, bei der Schutzdeckel 2 und Soundblende 5 als ein Teil gefertigt sind. Der Schutzdeckel 2 besteht dabei aus zwei Segmenten 3, wobei die Falzstelle 4 an der Position der Unterkante 51 der Soundblende 5 liegt. Im Schutzdeckel 2 ist eine Aussparung 9 in Form der Soundblende 5 eingearbeitet, sodass die Soundblende 5 passend in diesen eingeklappt werden kann. Um dem Benutzer das Angreifen an der Soundblende 5 zu erleichtern, ist an der Position der Spitze der Soundblende 5 im Schutzdeckel eine weitere Vertiefung 10 eingelassen.

Fig. 9 zeigt eine bevorzugte Ausführungsform der Erfindung in einer Draufsicht (Fig. 9a) und einer perspektivischen Ansicht im aufgestellten Zustand (Fig. 9b), bei der die Hinterkante 52 der Soundblende 5 die volle Breite des Schutzdeckels 2 aufweist. Damit ist es möglich ein besonders großes Klang- und Resonanzvolumen zu schaffen.

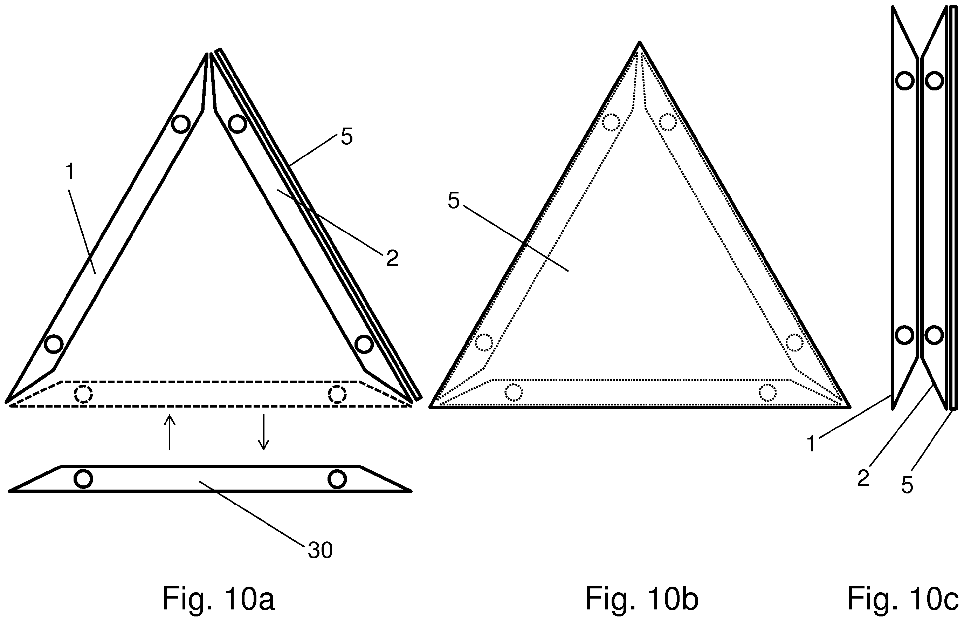

Eine weitere Ausführungsform der Erfindung, dargestellt in Fig. 10, besitzt ein viertes plattenförmiges Bauteil 30, welches z.B. in der Ebene der Unterlage liegt, und somit das Resonanzvolumen anstelle der Unterlage abschließt. Außerdem besitzen in dem Beispiel der Fig. 10 neben dem ersten plattenförmigen Bauteil 1 auch die Bauteile 2 und 30 jeweils Lautsprecher 111, welche in das durch die Bauteile 1, 2, 30, 5 definierte Volumen ragen.

Fig. 10a zeigt das System in Seitenansicht, wobei die Soundblende 5 noch auf dem zweiten Bauteil 2 liegt. Fig. 10b zeigt das System in Seitenansicht, wobei die Soundblende 5 in eine das Klangvolumen einseitig verschließende Position verschwenkt ist. Fig. 10 c zeigt das System in einem Transport- bzw. Lagerzustand, in dem die Bauteile 1, 2 und 5 aufeinander liegen.

Es ist dabei vorgesehen, dass bereits die Bauteile 1, 2, 5 ein erfindungsgemäßes Lautsprechersystem bilden, welches einen Akku oder eine Batterie aufweist, um unabhängig von einer externen Stromversorgung funktionstüchtig zu sein. Das vierte Bauteil dient dabei als Ladestation für den Akku oder die Batterie und kann dazu reversibel angeschlossen und entfernt werden. Das System ohne das vierte Bauteil kann dabei für den Transport in einen zusammengeklappten Zustand überführt werden.

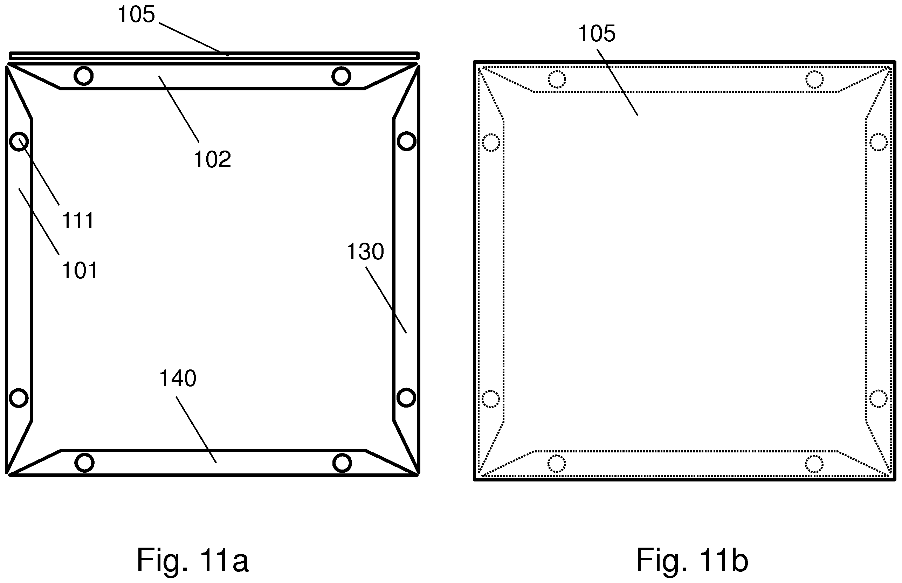

Eine weitere Ausführungsform ist ein quaderförmiges Lautsprechersystem, dargestellt in Fig. 11, wobei die plattenförmigen Bauteile 101, 102, 130, 140 die Seitenfläche des Quaders bilden und eine Grundfläche von dem plattenförmigen Bauteil 105 abgeschlossen wird. Fig. 11a zeigt das System in Seitenansicht, wobei die Soundblende 105 noch auf dem zweiten Bauteil 102 liegt. Fig. 11b zeigt das System in Seitenansicht, wobei die Soundblende 105 in eine das Klangvolumen einseitig verschließende Position verschwenkt ist.

Die Form dieser Ausführungsform kann auch dahingehend abgewandelt sein, dass beispielsweise das Bauteil 105 die Form eines Parallelogramms aufweist und die Anordnung der übrigen Bauteile daran angepasst ist. Auch kann das Bauteil 105 ein beliebiges n-Eck sein, wobei das Lautsprechersystem dementsprechend zusätzlich n plattenförmige Bauteile aufweist, welche die Seitenflächen bilden.

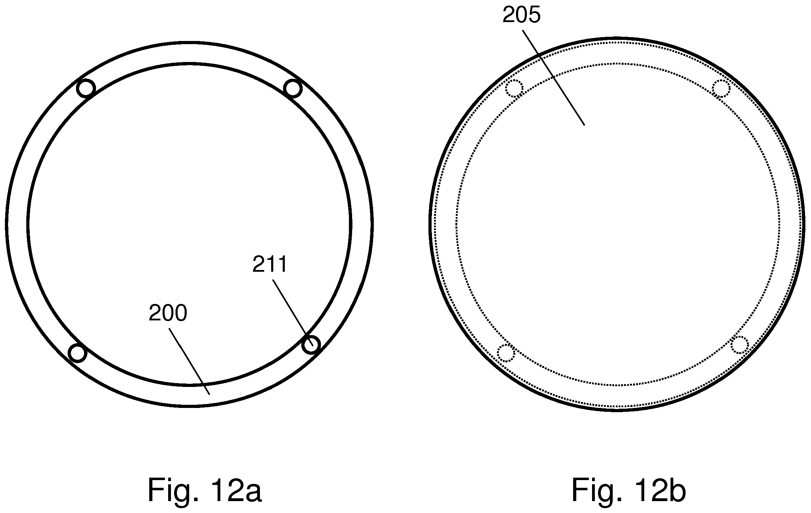

Gemäß einem Beispiel, welches nicht unter den Schutzumfang der Ansprüche fällt, kann die Form des Lautsprechersystems auch die eines Zylinders sein, wobei ein zylinderförmiges Bauteil 200 den wenigstens einen Lautsprecher 211 enthält, und dieser Zylinder 200 an einer seiner Stirnflächen durch ein plattenförmiges Bauteil 205 abgeschlossen ist. Grundsätzlich kann das plattenförmige Bauteil 205 auch beliebige andere Formen, und das Bauteil 200 eine daran angepasste Form aufweisen. Fig. 12a zeigt das System in Seitenansicht ohne die Soundblende 205. Fig. 12b zeigt das System in Seitenansicht, wobei die Soundblende 205 in eine das Klangvolumen einseitig verschließende Position verschwenkt ist.

Durch den Aufbau aus plattenförmigen Bauteilen kann das erfindungsgemäße Lautsprechersystem zusammengefaltet und somit für den Transport platzsparend verstaut werden. Gleichzeitig bildet es in einem aufgestellten Zustand ein Resonanzvolumen, welches für eine gute Klangqualität sorgt.

### Bezugszeichenliste

- 1: Tablet Computer
- 2: Schutzdeckel
- 3: Segment
- 4: Verbindungsstelle
- 5: Soundblende
- 7: Klemmleiste
- 8: Scharnier
- 9: Aussparung für Soundblende
- 10: Vertiefung zum Angreifen der Soundblende
- 11, 111, 211: Lautsprecher
- 12: erste Schwenkachse
- 13: zweite Schwenkachse
- 14: Ebene
- 16: abgeschrägte Kante
- 17: Rundung
- 30: viertes Bauteil
- 51: Unterkante Soundblende
- 52: Hinterkante Soundblende
- 53: Vorderkante Soundblende
- 101: erstes plattenförmiges Bauteil
- 102: zweites plattenförmiges Bauteil
- 105: fünftes plattenförmiges Bauteil
- 130: drittes plattenförmiges Bauteil
- 140: viertes plattenförmiges Bauteil
- 200: zylinderförmiges Bauteil
- 205: plattenförmiges Bauteil
- α: Neigungswinkel
- β: Aufstellwinkel

## Patentansprüche

1. Lautsprechersystem mit einem ersten plattenförmigen Bauteil (1; 101), das wenigstens einen Lautsprecher (11) aufweist, einem zweiten plattenförmigen Bauteil (2; 102), welches um eine erste Schwenkachse (12) schwenkbar an dem ersten Bauteil (1; 101) befestigt ist,
wobei das System wenigstens ein drittes Bauteil (5; 105) aufweist, welches um eine zweite Schwenkachse (13) schwenkbar an dem zweiten Bauteil (2; 102) befestigt ist, wobei die Schwenkachsen (12, 13) jeweils an Seitenkanten der Bauteile (1, 2, 5; 101, 102, 105) angeordnet sind, wobei das erste Bauteil (1; 101), das zweite Bauteil (2; 102) und das dritte Bauteil (5; 105; 205) aus einem flach liegenden Zustand, in dem das erste, zweite und dritte Bauteil (1, 2, 5; 101, 102, 105) parallel zueinander ausgerichtet sind, in einen aufgerichteten Zustand überführbar sind, in dem das erste, zweite und dritte Bauteil (1, 2, 5; 101, 102, 105) jeweils zueinander einen spitzen, rechten oder stumpfen Winkel bilden,
und wobei die Formen der Bauteile (1, 2, 5; 101, 102, 105) und die Anordnung der Schwenkachsen (12, 13) so gewählt sind, dass die Bauteile (1, 2, 5; 101, 102, 105) im aufgerichteten Zustand jeweils mit einer ihrer Seitenkanten in einer Ebene (14) liegen, wobei die Bauteile (1, 2, 5; 101, 102, 105) zusammen mit der Ebene (14) ein Volumen definieren, welches an der, dem dritten Bauteil (5; 105) gegenüberliegenden Seite geöffnet ist,
**dadurch gekennzeichnet, dass** der wenigstens eine Lautsprecher (11) des ersten Bauteils (1; 101; 201) an einer Seitenkante des ersten Bauteils (1; 101; 201) angeordnet ist, und dass die Seitenkante des ersten Bauteils (1; 101; 201) mit dem Lautsprecher (11) eine abgeschrägte Kante (16) oder Rundung (17) aufweist, sodass eine Öffnung des Lautsprechers (11) in das Innere des Volumens gerichtet ist.

2. Lautsprechersystem nach Anspruch 1, **dadurch gekennzeichnet, dass** die Formen der Bauteile (1, 2, 5; 101, 102, 105) und die Anordnung der Schwenkachsen (12, 13) so gewählt sind, dass im aufgerichteten Zustand das zweite Bauteil (2; 102) und das dritte Bauteil (5; 105) als Stützvorrichtung für das erste Bauteil (1; 101) dient.

3. Lautsprechersystem nach Anspruch 1, **dadurch gekennzeichnet, dass** wenigstens ein weiteres Bauteil (2, 5; 102, 105) wenigstens einen weiteren Lautsprecher (11, 111) an einer Seitenkante aufweist, sodass eine Öffnung des weiteren Lautsprechers (11, 111) in das Innere des Volumens gerichtet ist.

4. Lautsprechersystem nach Anspruch 3, **dadurch gekennzeichnet, dass** das dritte Bauteil (5; 105) eine dreieckige Grundform besitzt mit einer, in aufgerichtetem Zustand, in der Ebene (14) liegenden Unterkante (51), einer an das zweite Bauteil (2; 102) angrenzenden Hinterkante (52) und einer an das erste Bauteil (1; 101) angrenzenden Vorderkante (53).

5. Lautsprechersystem nach Anspruch 4, **dadurch gekennzeichnet, dass** der Neigungswinkel (α) zwischen der Unterkante (51) des dritten Bauteils (5; 105) und der Hinterkante (52) des dritten Bauteils (5; 105) kleiner als 90° ist.

6. Lautsprechersystem nach einem der vorhergehenden Ansprüche **dadurch gekennzeichnet, dass** eine schwenkbare Verbindung zwischen dem dritten Bauteil (5; 105) und dem zweiten Bauteil (2; 102) ein federunterstütztes Scharnier (8) ist.

7. Lautsprechersystem nach einem der vorhergehenden Ansprüche, **dadurch gekennzeichnet, dass** eine Verbindung zwischen dem dritten Bauteil (5; 105) und dem zweiten Bauteil (2; 102) eine Klemmschiene (7) mit Scharnier (8) aufweist.

8. Lautsprechersystem nach einem der vorhergehenden Ansprüche, **dadurch gekennzeichnet, dass** das dritte Bauteil (5; 105) und das zweite Bauteil (2; 102) einstückig miteinander verbunden sind.

9. Lautsprechersystem nach Anspruch 8, **dadurch gekennzeichnet, dass** das zweite Bauteil einen Bereich (9) reduzierter Dicke aufweist, dessen Größe und Form mindestens Größe und Form des dritten Bauteils (5; 105) aufweist.

10. Lautsprechersystem nach einem der vorhergehenden Ansprüche, **dadurch gekennzeichnet, dass** das zweite Bauteil (2; 102) mehrere Segmente (3) aufweist, die gelenkig miteinander verbunden sind.

11. Lautsprechersystem nach einem der Ansprüche 4 bis 10, **dadurch gekennzeichnet, dass** die Hinterkante (52) des dritten Bauteils (5; 105) die gleiche Breite wie die mit ihr verbundene Kante des zweiten Bauteils (2; 102) aufweist.

12. Lautsprechersystem nach einem der vorhergehenden Ansprüche, **dadurch gekennzeichnet, dass** das erste Bauteil (1; 101) ein Tablet Computer ist und das zweite Bauteil (2; 102) ein Schutzdeckel für den Tablet Computer ist.

13. Lautsprechersystem nach einem der vorhergehenden Ansprüche, **dadurch gekennzeichnet, dass** das System ein viertes Bauteil (30; 130) aufweist, wobei im aufgerichteten Zustand eine Seitenkante des ersten Bauteils (1; 101) an einer ersten Seitenkante des vierten Bauteils (30; 130) anliegt, eine Seitenkante des zweiten Bauteils (2; 102) an einer der ersten Seitenkante gegenüberliegenden zweiten Seitenkante des vierten Bauteils (30; 130) anliegt und eine Seitenkante des dritten Bauteils (5; 105) an einer dritten Seitenkante des vierten Bauteils (30; 130) anliegt.

14. Lautsprechersystem nach einem der Ansprüche 1 bis 12, **dadurch gekennzeichnet, dass** das System ein viertes Bauteil (130) und ein fünftes Bauteil (140) aufweist, wobei die fünf Bauteile einen einseitig offenen Quader umschließen.

## Claims

1. A loudspeaker system having a first panel-like component (1; 101), which has at least one loudspeaker (11), a second panel-like component (2; 102), which is fixed pivotally to the first component (1; 101) about a first pivot axis (12),
wherein the system has at least one third component (5; 105), which is fixed pivotally to the second component (2; 102) about a second pivot axis (13), wherein the pivot axes (12, 13) are each arranged on side edges of the components (1, 2, 5; 101, 102, 105), wherein the first component (1; 101), the second component (2; 102) and the third component (5; 105; 205) can be moved from a flat-lying state, in which the first, second and third components (1, 2, 5; 101, 102, 105) are aligned parallel to one another, into a raised state, in which the first, second and third components (1, 2, 5; 101, 102, 105) in each instance form an acute, right or obtuse angle relative to one another,
and wherein the shapes of the components (1, 2, 5; 101, 102, 105) and the arrangement of the pivot axes (12, 13) are selected such that the components (1, 2, 5; 101, 102, 105), in the raised state, always lie with one of their side edges in one plane (14), wherein the components (1, 2, 5; 101, 102, 105) and the plane (14) jointly define a volume, which is open on the side opposite the third component (5; 105), **characterized in that** the at least one loudspeaker (11) of the first component (1; 101; 201) is arranged on a side edge of the first component (1; 101; 201) and that the side edge of the first component (1; 101; 201) with the loudspeaker (11) has a beveled edge (16) or rounding (17) such that an opening of the loudspeaker (11) is directed into the interior of the volume.

2. The loudspeaker system according to Claim 1, **characterized in that** the shapes of the components (1, 2, 5; 101, 102, 105) and the arrangement of the pivot axes (12, 13) are selected such that, in the raised state, the second component (2; 102) and the third component (5; 105) serve as a support device for the first component (1; 101).

3. The loudspeaker system according to Claim 1, **characterized in that** at least one further component (2, 5; 102, 105) has at least one further loudspeaker (11, 111) on a side edge such that an opening of the further loudspeaker (11, 111) is directed into the interior of the volume.

4. The loudspeaker system according to Claim 3, **characterized in that** the third component (5; 105) possesses a triangular basic shape having, in the raised state, a bottom edge (51) lying in the plane (14), a rear edge (52) adjacent to the second component (2; 102) and a front edge (53) adjacent to the first component (1; 101).

5. The loudspeaker system according to Claim 4, **characterized in that** the inclination angle (α) between the bottom edge (51) of the third component (5; 105) and the rear edge (52) of the third component (5, 105) is less than 90°.

6. The loudspeaker system according to any one of the preceding claims, **characterized in that** a pivotal connection between the third component (5; 105) and the second component (2; 102) is a spring-supported hinge (8).

7. The loudspeaker system according to any one of the preceding claims, **characterized in that** a connection between the third component (5; 105) and the second component (2; 102) has a clamping rail (7) with a hinge (8).

8. The loudspeaker system according to any one of the preceding claims, **characterized in that** the third component (5; 105) and the second component (2; 102) are interconnected in one piece.

9. The loudspeaker system according to Claim 8, **characterized in that** the second component has a region (9) of reduced thickness, the size and shape of which has at least the size and shape of the third component (5; 105).

10. The loudspeaker system according to any one of the preceding claims, **characterized in that** the second component (2; 102) has a plurality of segments (3), which are articulatingly interconnected.

11. The loudspeaker system according to any one of Claims 4 to 10, **characterized in that** the rear edge (52) of the third component (5; 105) has the same width as the edge of the second component (2; 102) connected thereto.

12. The loudspeaker system according to any one of the preceding claims, **characterized in that** the first component (1; 101) is a tablet computer and the second component (2; 102) is a protective cover for the tablet computer.

13. The loudspeaker system according to any one of the preceding claims, **characterized in that** the system has a fourth component (30; 130), wherein in the raised state, a side edge of the first component (1; 101) abuts on a first side edge of the fourth component (30; 130), a side edge of the second component (2; 102) abuts on a second side edge of the fourth component (30; 130) which is opposite the first side edge, and a side edge of the third component (5; 105) abuts on a third side edge of the fourth component (30; 130).

14. The loudspeaker system according to any one of Claims 1 to 12, **characterized in that** the system has a fourth component (130) and a fifth component (140), wherein the fifth components enclose a cuboid, which is open on one side.

## Revendications

1. Système de haut-parleurs avec un premier composant (1 ; 101) en forme de plaque, qui comporte au moins un haut-parleur (11), un deuxième composant (2 ; 102) en forme de plaque, lequel est fixé au premier composant (1 ; 101) pivotable autour d'un premier axe de pivotement (12),
sachant que le système comporte au moins un troisième composant (5 ; 105), lequel est fixé sur le deuxième composant (2 ; 102) pivotable autour d'un axe de pivotement (13), sachant que les axes de pivotement (12, 13) sont disposés respectivement sur les bords latéraux des composants (1, 2, 5 ; 101, 102, 105), sachant que le premier composant (1 ; 101), le deuxième composant (2 ; 102) et le troisième composant (5 ; 105 ; 205) peuvent être transférés d'un état à plat, dans lequel le premier, le deuxième et le troisième composant (1, 2, 5 ; 101, 102, 105) sont orientés parallèlement l'un à l'autre, dans un état redressé dans lequel le premier, le deuxième et le troisième composant (1, 2, 5 ; 101, 102, 105) forment respectivement l'un par rapport à l'autre un angle aigu, droit ou obtus,
et sachant que les formes des composants (1, 2, 5 ; 101, 102, 105), et la disposition des axes de pivotement (12, 13) sont choisis de telle manière que les composants (1, 2, 5 ; 101, 102, 105), se situent respectivement à l'état redressé avec un de leurs bords latéraux dans un plan (14), sachant que les composants (1, 2, 5 ; 101, 102, 105), définissent ensemble avec le plan (14) un volume, lequel est ouvert sur le côté opposé au troisième composant (5 ; 105),
**caractérisé en ce qu'**au moins un haut-parleur (11) du premier composant (1 ; 101 ; 201) est disposé sur un bord latéral du premier composant (1 ; 101 ; 201), et **en ce que** le bord latéral du premier composant (1 ; 101 ; 201) comporte avec le haut-parleur (11) un bord chanfreiné (16) ou un arrondi (17) de telle manière qu'une ouverture du haut-parleur (11) est dirigée vers l'intérieur du volume.

2. Système de haut-parleurs selon la revendication 1, **caractérisé en ce que** les formes des composants (1, 2, 5 ; 101, 102, 105) et la disposition des axes de pivotement (12, 13) sont choisis de telle manière qu'à l'état redressé le deuxième composant (2 ; 102) et le troisième composant (5 ; 105) servent de dispositif de soutien au premier composant (1 ; 101).

3. Système de haut-parleurs selon la revendication 1, **caractérisé en ce qu'**au moins un autre composant (2, 5 ; 102, 105) comporte au moins un autre haut-parleur (11, 111) sur un bord latéral de telle manière qu'une ouverture de l'autre haut-parleur (11, 111) est dirigée vers l'intérieur du volume.

4. Système de haut-parleurs selon la revendication 3, **caractérisé en ce que** le troisième composant (5 ; 105) possède une forme de base triangulaire avec, à l'état redressé, un bord inférieur (51) situé dans le plan (14), un bord arrière (52) adjacent au deuxième composant (2 ; 102) et un bord avant (53) adjacent au premier composant (1 ; 101).

5. Système de haut-parleurs selon la revendication 4, **caractérisé en ce que** l'angle d'inclinaison (a) entre le bord inférieur (51) du troisième composant (5 ; 105) et le bord arrière (52) du troisième composant (5 ; 105) est inférieur à 90°.

6. Système de haut-parleurs selon l'une quelconque des revendications précédentes, **caractérisé en ce qu'**une liaison pivotable entre le troisième composant (5 ; 105) et le deuxième composant (2 ; 102) est une charnière à ressort (8).

7. Système de haut-parleurs selon l'une quelconque des revendications précédentes, **caractérisé en ce qu'**une liaison entre le troisième composant (5 ; 105) et le deuxième composant (2 ; 102) comporte un rail de serrage (7) avec une charnière (8).

8. Système de haut-parleurs selon l'une quelconque des revendications précédentes, **caractérisé en ce que** le troisième composant (5 ; 105) et le deuxième composant (2 ; 102) sont reliés l'un à l'autre en une seule pièce.

9. Système de haut-parleurs selon la revendication 8, **caractérisé en ce que** le deuxième composant comporte une zone (9) d'épaisseur réduite, dont la taille et la forme comportent au moins la taille et la forme du troisième composant (5, 105).

10. Système de haut-parleurs selon l'une quelconque des revendications précédentes, **caractérisé en ce que** le deuxième composant (2 ; 102) comporte plusieurs segments (3), qui sont reliés entre eux de façon articulée.

11. Système de haut-parleurs selon l'une quelconque des revendications 4 à 10, **caractérisé en ce que** le bord arrière (52) du troisième composant (5 ; 105) comporte la même largeur que le bord relié à celui-ci du deuxième composant (2 ; 102).

12. Système de haut-parleurs selon l'une quelconque des revendications précédentes, **caractérisé en ce que** le premier composant (1 ; 101) est une tablette et le deuxième composant (2 ; 102) est un couvercle de protection pour la tablette.

13. Système de haut-parleurs selon l'une quelconque des revendications précédentes, **caractérisé en ce que** le système comporte un quatrième composant (30 ; 130), sachant qu'à l'état redressé un bord latéral du premier composant (1 ; 101) vient s'appliquer sur un premier bord latéral du quatrième composant (30 ; 130), un bord latéral du deuxième composant (2 ; 102) vient s'appliquer sur un deuxième bord latéral du quatrième composant (30 ; 130) opposé au premier bord latéral et un bord latéral du troisième composant (5 ; 105) vient s'appliquer sur un troisième bord latéral du quatrième composant (30 ; 130).

14. Système de haut-parleurs selon l'une quelconque des revendications 1 à 12, **caractérisé en ce que** le système comporte un quatrième composant (130) et un cinquième composant (140), sachant que les cinq composants entourent un parallélépipède ouvert d'un côté.
